# EUROPEAN PATENT APPLICATION

(11) **EP 2 036 443 A1**
(43) Date of publication of application: **18.03.2009**
(21) Application number: 07743783.8
(22) Date of filing: 21.05.2007
(51) Int. Cl.: A23L 1/20

(54) **METHOD OF PRODUCING PROCESSED FOOD MATERIAL AND THE PROCESSED FOOD MATERIAL**

(30) Priority: 25.05.2006 JP 2006145859
(71) Applicant: Ohkawa Ltd., Yoshino-gun, Nara 638-0031 (JP)
(72) Inventor: KIDA, Keiji, Yoshino-gun Nara (JP)
(74) Representative: Hayes, Adrian Chetwynd
(86) International application number: PCT/JP2007/060349
(87) International publication number: WO 2007/138907

(57) **Abstract**

Okara (bean curd refuse), which has been prepared by blending with a coagulant, is kneaded together with a jelly-type edible polysaccharide having a high thickening stability. Then, the kneaded mixture is coagulated by heating so that the Okara is bonded to the edible polysaccharide. As the above-mentioned edible polysaccharide, use is made of tokoroten (a marine alga), Konjac, Kudzu starch jelly or the like.

## Description

### TECHNICAL FIELD

The present invention relates to a method of producing a processed food material and the processed food material. Particularly, it relates to a processed food material mainly containing Okara (bean curd refuse).

### BACKGROUND ART

As this kind of processed foods of mainly containing Okara (bean curd refuse), processed foods obtained by evenly mixing Okara with Konjac and egg or Chinese yam and coagulating the mixture with an alkali solution are disclosed in JP Patent No. 3498087 (Patent Document 1), JP Patent No. 3721351 (Patent Document 2), JP Patent Application Laid-Open No. 2000-262245 (Patent Document 3), and the like.

In a method for manufacturing a processed food material disclosed in Patent Document 1, Okara is mixed with a raw egg, a mixture of Konjac flour with warm water and an alkali solution having calcium hydroxide dissolved therein are added to and mixed with the Okara mixture. The resultant mixture is coagulated and molded, and then heated, thus providing a food having a meat-like texture.
More specifically, an Okara food material obtained by method disclosed in Patent Document 1 is provided with a meat-like texture by absorbing the egg in Okara and covering the Okara with Konjac. Further, an alkali solution is mixed and kneaded with a mixture of egg, Okara, Konjac flour and water.

In a processed food disclosed in Patent Document 2, Chinese yam instead of an egg is mixed with Konjac and Okara. A large amount of Chinese yam is mixed so that its mixing ratio to a Konjac is 2.5 to 5.0 times, and the mixture contains Okara and Konjac in amounts of 33 to 83 weight% and 67 to 17 weight%, respectively. Thus, the mixture contains much more Chinese yam than Okara, and the ratio of Chinese yam in the processed food is the largest as if it is a Chinese yam food.
Further, in Examples 1, 3 and 4 disclosed in Patent Document 2, Okara is mixed and kneaded with warm water; Konjac and an egg are added to the mixture and the obtained mixture is mixed homogeneously; and then an alkali solution is added to the kneaded mixture so that the mixture is coagulated. In Example 2 thereof, Okara is mixed and kneaded with warm water; Konjac and a grated Chinese yam are added together to the mixture and is mixed homogeneously; and then an alkali solution is added to the kneaded mixture so that the mixture is coagulated.

Patent Document 3 relates to a coagulated porous health food. The food contains a water-absorbent food component in a Konjac component having poor taste permeation so that the obtained food becomes a porous and water-absorbent food. Claim 6 of the document is directed to Okara as a water-absorbent food component.
A method for manufacturing the coagulated porous health food, which is disclosed in paragraph 0039 of the document, comprises: mixing a water-absorbent food with water; adding Konjac flour to the mixture and kneading; and mixing and kneading the swollen mixture with an aqueous solution of a coagulant, or simultaneously mixing and kneading a water-absorbent food with Konjac swollen with water and an aqueous solution of a coagulant.

Patent Document 1: JP Patent No. 3498087
Patent Document 2: JP Patent No. 3721351
Patent Document 3: JP Patent Application Laid-Open No. 2000-262245

### DISCLOSURE OF THE INVENTION

### PROBLEMS TO BE SOLVED BY THE INVENTION

Methods for manufacturing processed food materials containing Okara described in the Patent Documents 1, 2 and 3 include any of the following processes (1), (2), and (3).
(1) simultaneously adding a Konjac component and an alkali solution as a coagulant to Okara, and kneading the mixture;
(2) mixing Okara with Konjac, adding an alkali solution to the mixture and kneading the mixture; and
(3) adding an alkali solution to Konjac to prepare a Konjac paste and kneading it with Okara.

However, in the method including any of the above (1) to (3), the added alkali solution is absorbed in the Konjac component and thus it does not sufficiently penetrate in Okara. As a result, it is difficult for the Okara to be coagulated integrally with Konjac and egg or Chinese yam. Particularly, when the mixing ratio of Okara is increased, poor integration of Okara with Konjac and other mixing components is remarkable. Thus, when Okara is exposed on the surface for imparting good permeation of taste, it easily falls apart.

Usually, a processed food mainly containing Okara is made of dried powdery Okara. When such powdery Okara is mixed with a food material other than Konjac for preparing a processed food material, the above-mentioned problem occurs and making it difficult to tie Okara with other food material.

The present invention has been achieved in view of the above-mentioned problems. Thus, it is an object of the present invention to enable Okara not to become dry and to be firmly integrated with other food material when Okara is used as a main component to prepare a processed food material by mixing with other food material.

### MEANS FOR SOLVING THE PROBLEMS

In order to solve the above problems, the present invention firstly provides a method of producing a processed food material, which comprises:
preparing Okara (bean curd refuse) by mixing with a coagulant;
kneading the prepared Okara with a jelly-type edible polysaccharide having a high thickening stability; and
coagulating by heating the kneaded mixture so that the Okara is bonded to the edible polysaccharide.

As the edible polysaccharide, tokoroten (a marine alga), Konjac or Kudzu starch jelly is preferably used. Other than the above-mentioned food material, food materials listed below may be used either alone or in combination.
Animal food:
Terrestrial animals - hen's raw eggs, fermented milk and animal joints.
Aquatic animals - epidermis of fish, fish eggs, jellyfishes, shark fins, eels and loaches.
   Plant food:
   Terrestrial plants - yams such as Chinese yam, Ichoimo and Tsukuneimo, taro, okura (gumbo), Japanese yam, water shield, welsh onion, glutinous rice, non-glutinous rice, Natto (fermented soybeans) and nameko mushroom.
   Aquatic plants - seaweeds such as kombu (laminaria) and wakame.

As described above, in the present invention, Okara is firstly mixed and stirred with an alkali solution so that the Okara absorbs the alkali solution, and thus the Okara itself becomes a "Okara coagulant" having flowability.
In this way, the Okara becomes a flowable coagulant, and a jelly-type edible polysaccharide having a high thickening stability such as tokoroten (a marine alga) and Konjac is kneaded with the Okara coagulant. This enables the Okara to be firmly bonded to the edible polysaccharide, and the obtained food material does not have a dry texture.
Further, a coagulant is added to the Okara in advance, the Okara does not fall apart even when it is exposed on the surface. Since the water-absorbent Okara is exposed on the surface, a food material with good permeation of taste can be obtained.

When Konjac is used as the edible polysaccharide, calcium hydroxide or calcium oxide is used as the coagulant and the coagulant is stirred with warm water or ordinary temperature water to prepare an alkali solution.
The alkali solution is added to Okara and the mixture is stirred to prepare the Okara.
Meanwhile, refined Konjac flour and water are stirred and the prepared Konjac paste is stored for a predetermined time period. Then, the paste is kneaded with the prepared Okara for a predetermined time period, and coagulated by heating.
Further, after the coagulating by heating, the processed food material is packed in vacuum and sterilized by boiling for a predetermined time period, and then preferably cooled with cold water for a predetermined time period.

In other words, when Konjac is mixed with Okara, refined Konjac flour is stirred with water to prepare a Konjac paste and this Konjac paste does not contain a coagulant usually composed of caustic lime.
This Konjac paste is kneaded with the Okara coagulant prepared by mixing of a coagulant. This can solve the problems of the manufacturing methods disclosed in the Patent Documents 1, 2 and 3, so that the Okara can be firmly tied with the Konjac paste.

When powdery Okara is used as the above Okara, the powdery Okara is preferably passed through a mesh to be miniaturized so as to have a size of 0.05mm to 1 mm. The obtained powdery Okara is preferably stirred for a predetermined time period before it is mixed and stirred with the alkali solution.
Miniaturization of powdery Okara in this way increases contact areas with the alkali solution so as to enhance binding strength of the Okara to mixed food materials. Thus, Okara exposed on the surface does not easily fall apart and at the same time taste permeation can be enhanced through Okara uniformly dispersed on the surface. In addition, Okara is uniformly dispersed inside, thus enhancing taste permeation as a whole.

The present invention secondly provides a processed food material wherein an Okara component that is miniaturized into a size of 0.05mm to 1 mm is bonded to a edible polysaccharide with a high thickening stability, and the Okara component is dispersed on the surface and inside of the edible polysaccharide and mixed therewith.
A producing method of the processed food material of the present invention is preferably the above-mentioned producing method, but not limited thereto.

As the edible polysaccharide to be mixed with the Okara, tokoroten (a marine alga), Konjac, or Kudzu starch jelly is preferably used as described above, but other edible polysaccharide with a high thickening stability may be used. It is preferable that these are jellified and mixed with the Okara and the coagulant.

When Konjac is used as the edible polysaccharide, it is preferable that a Konjac component, an Okara component and water are mixed in amounts of 1 to 5 mass%, 4 to 10 mass% and 70 to 95 mass%, respectively so that the total of the Konjac component, the Okara component and the water is 100 mass% and a coagulant is mixed in an amount of 1 to 15 mass% with respect to 100 mass% of the Konjac component.

The Konjac component may be prepared from raw Konjac or from refined Konjac flour. The Okara component may be prepared from dried powdery Okara or from Okara containing water.
The reason that 1 to 5 mass% of Konjac component is present is that: if the amount of Konjac component exceeds 5 mass%, the obtained food becomes too hard and has a poor texture; and less than 1 mass% of Konjac component is too low, resulting in poor binding with the Okara.
The reason that 1 to 5 mass% of Okara component is present is that: less than 1 mass% has almost no significance and poor permeation of taste; and an amount exceeding 5 mass% results in poor binding with the Konjac component.
The reason that 1 to 15 mass% of a coagulant with respect to the Konjac component is: less than 1 mass% makes it difficult to bind the Konjac component with the Okara component; and more than 15 mass% causes the obtained food to be too hard.

It is preferable that the processed food material containing Okara and Konjac does not contain an egg or Chinese yam.
In other words, the processed food material of the present invention enables Okara and Konjac to be smoothly tied with each other without dry texture, and thus, basically, blending of viscous food such as an egg or Chinese yam is not necessary. However, it may be added in view of seasoning.
Further, when Konjac is mixed with Okara, calcium hydroxide or calcium oxide is used as a coagulant. In terms of suppression of a distinctive odor of Konjac, calcium hydroxide obtained from calcined seashell or/and calcined eggshell is preferably used.

The processed food material of the present invention contains an Okara component, a edible polysaccharide such as Konjac, water and a coagulant, and thus it can be prepared so as to have a low calorie of 10 to 50 calories per 100 g. Further, the starting material of Okara is soybean and thus the Okara contains protein. Due to this, the obtained food can be a nutritious food while having a low calorie.

Further, seasonings, animal food materials comprising meats or fishes, and/or plant food materials comprising vegetables and fruits may be added to the processed food material of the present invention. Furthermore, a thickening stabilizer such as gums may be added thereto.
- Examples of the seasonings include sugar, salt, vinegar, soy sauce, sauce, miso, pepper, sesame, citron and wasabi (Japanese horse radish).
   Except seasonings, it is preferable that mixtures of vegetables, fruits, cereals, meats and fishes are formed in a paste or liquid form and added.
   Selection and combination of the above-mentioned additives can produce foods having specific tastes or textures.
   For example, when soy sauce or miso is used as a seasoning and a mixture of fish meat paste is used, a processed food material with a Japanese taste can be produced.
   Further, when a sauce, salt, pepper as seasonings and a meat paste as a mixture are used, a processed food material with a Western taste can be produced.
   Furthermore, sugar, butter, or the like as a seasoning and fruits as a mixture are used, a sweet-like processed food material can be produced. In this case, since the food material mainly contains Konjac and Okara, a low calorie sweet can be produced.

### EFFECT OF THE INVENTION

As described above, in the producing method for a processed food material according to the present invention, a coagulant such as calcium hydroxide is added to Okara to prepare Okara, and thus the Okara itself becomes a flowable coagulant. Thus, when a jelly-type edible polysaccharide with a high thickening stability such as tokoroten (a marine alga) is kneaded with the Okara coagulant, the Okara can be firmly bonded to the edible polysaccharide, thereby providing a food material without dry texture. In addition, the coagulant is mixed with the Okara in advance, and therefore the Okara does not fall apart even when it is exposed on the surface. Further, exposure of the water-absorbent Okara on the surface enables the obtained food material to have good permeation of taste.

### BRIEF DESCRIPTION OF THE DRAWINGS

Fig.1 is a cross sectional view showing a processed food material of a first embodiment.
Fig.2 shows a producing process of the processed food material of the first embodiment.

### EXPLANATIONS OF REFERENCE NUMERALS AND SYMBOLS

1 processed food material
2 Okara component
10 alkali solution
11 Powdery Okara
13 Okara coagulant
15 refined Konjac flour
18 Konjac paste
22 totally kneaded mixture

### BEST MODE FOR CARRYING OUT THE INVENTION

Hereinafter, embodiments of the present invention will be described.

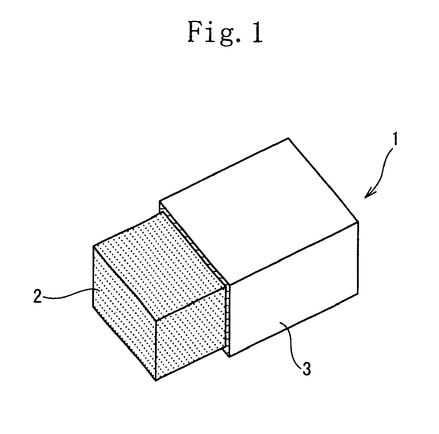

Fig.1 illustrates a processed food material 1 of Okara according to a first embodiment, wherein the processed food material 1 is composed of a mixture of Okara and Konjac and is sealed in vacuum with a packaging material 3.
The processed food material 1 contains 4 to 10 mass% of Okara component, 1 to 5 mass% of Konjac component, and 70 to 95 mass% of water so that the total of the Konjac component, the Okara component and the water is 100 mass%.
Further, a coagulant of calcium hydroxide is added in an amount of 1 to 15 mass% with respect to 100 mass% of the Konjac component. As the calcium hydroxide, powder prepared from calcined seashell is used instead of caustic lime that is usually used. It should be noted that viscous food such as egg and Chinese yam is not blended.

The processed food material 1 of Okara is prepared by blending of refined Konjac flour, while powdery Okara is blended as the Okara component so that the ratio of the refined Konjac flour to the powdery Okara is in the range of 1:2 to 1:4. The blending ratio of Konjac component, Okara component and water is adjusted in the above range of each component so that the processed food material 1 has 10 to 50 calories per 100 g.

The processed food material 1 of the present embodiment has a rectangular solid as shown in Fig.1. On the surface and inside thereof, miniaturized Okara component 2 with a size of 0.05 mm to 1 mm are dispersed in a generally uniform manner so as to be tied integral with the Konjac component.
The shape of the processed food material 1 is not limited, and may have any shape.

A method for producing the processed food material 1 of Okara is as described below. The calcium hydroxide is stirred with water to prepare an alkali solution and the alkali solution is mixed with the Okara component to prepare a flowable "Okara coagulant". This Okara coagulant is kneaded with a Konjac paste obtained by mixing refined Konjac flour with water.
The Okara coagulant is prepared so that the mixing ratio between the calcium hydroxide and water is in the range of 1:2 to 1:120 and the mixing ratio between alkali solution and Konjac component is in the range of 1:10 to 45:10.
The Konjac paste is prepared so that the mixing ratio between the refined Konjac flour and water is in the range of 1:20 to 1:50.

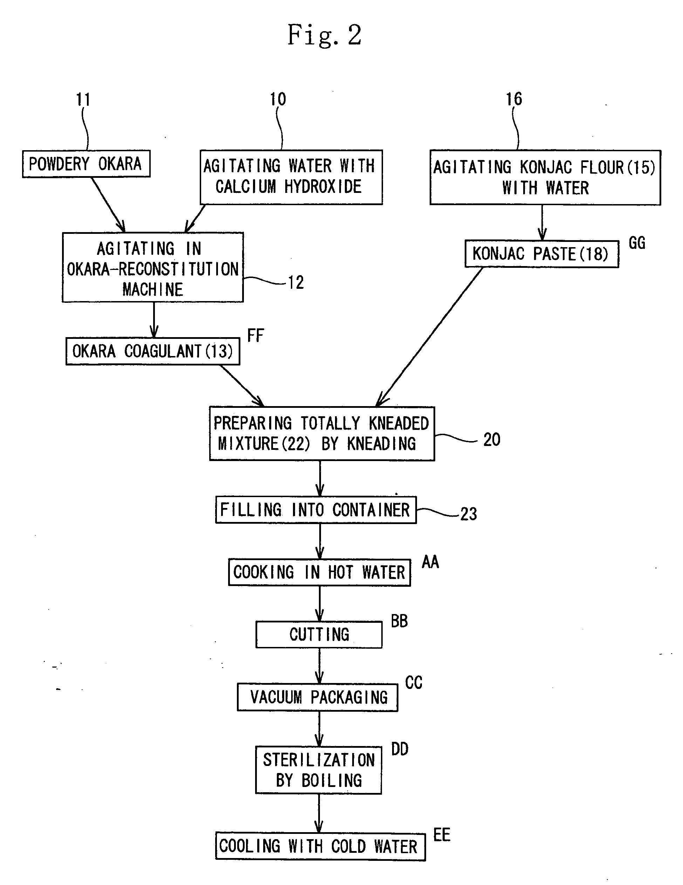

Hereafter, a method for producing the processed food material 1 of Okara is described in detail by referring to Fig.2.

In a method for preparing Okara by mixing with a coagulant of calcium hydroxide, calcium hydroxide is stirred with water at 20 to 90°C (preferably 50 to 70°C) and an alkali solution 10 is prepared.
On the other hand, dried powdery Okara 11 is passed through a mesh with openings of 0.05 mm to 1 mm to be miniaturized so as to have a size of 0.05 mm to 1 mm. The miniaturized powdery Okara is stirred in an Okara-reconstitution machine 12 in advance. The prepared alkali solution 10 is added to the stirred powdery Okara 11, and the mixture is stirred.
The alkali solution 10 is prepared so that the mixing ratio of the calcium hydroxide and water is in the range of 1:2 to 1:120.
The alkali solution 10 is mixed with the powdery Okara 11 so that mixing ratio therebetween is in the range of 1:10 to 45:10. The mixture is stirred in the Okara-reconstitution machine 12 for 5 to 10 minutes, thus preparing an Okara coagulant 13 containing calcium hydroxide.

Meanwhile, refined Konjac flour 15 is mixed with water and the mixture thereof is stirred in a stirrer 16 for 5 minutes or less (preferably 2 to 3 minutes), thus preparing a Konjac paste 18. At this stage, the Konjac paste 18 does not contain a coagulant such as caustic lime.
The refined Konjac flour 15 and water are mixed with each other in the range of 1:20 to 1:50, and the mixture thereof stirred. A temperature of water to be mixed is not limited, but water having an ordinary temperature of 15 to 23°C rather than warm water is preferably used.
The Konjac paste 18 prepared in the stirrer 16 is kneaded to be jellified. The kneading is stopped when the paste is jellified, and the resultant paste is stored for more than several minutes up to 2 hours so that the Konjac paste 18 is swollen.

The Okara coagulant 13 as prepared above and the stored jelly Konjac paste 18 are put into a kneading machine 20 and kneaded for 1 to 3 minutes.
After the kneading, a totally kneaded mixture 22 is filled into a container 23, and the container 23 is placed in warm water at 100°C or less (preferably 60 to 95°C) for 12 hours or less (preferably 2 to 4 hours) for cooking.
Thereafter, the totally kneaded mixture 22 is taken out of the container 23, cut into pieces with a predetermined size, and packed in vacuum.
Then, boiling sterilization is conducted at 80 to 100°C for 1 to 3 hours,
and cooling is conducted with the cold water for 1 to 2 hours.

The totally kneaded mixture 22 may be packed and sealed in a packaging material, and then heated and coagulated.

### [Examples]

- Into a container of an Okara-reconstitution machine, 8 kg of dried powdery Okara was fed and stirred for 5 minutes. A calcium hydroxide solution prepared by dissolving 200 g of calcium hydroxide powder in 20 liters of warm water at 60°C was added in several batches to the stirred powdery Okara. After the addition of the whole calcium hydroxide solution, the resultant mixture was stirred and mixed. Thus, the water was mixed with Okara uniformly in the mixture, so that a "Okara coagulant 13" was prepared.
On the other hand, 3 kg of refined Konjac flour was added to 80 liters of water at ordinary temperature, and stirred and mixed at a low speed for preparing a jelly-type Konjac paste 18. After the preparation, the mixing was stopped for a few minutes and the paste was allowed to stand.
The Okara coagulant 13 and the Konjac paste 18 were fed into a kneading machine and kneaded at a high speed for 2 minutes to prepare a totally kneaded mixture 22.
The totally kneaded mixture 22 was put into another container, and the container was placed and heated in warm water at 95°C for 2 hours, so that the mixture was coagulated.

After the coagulation, the kneaded mixture was removed from the container and subjected to cutting process. Thereafter, primary cooling was performed by immersing the resultant kneaded mixture in cold water at a temperature of up to 30°C for 1 hour. After the primary cooling, the kneaded mixture was packed in vacuum.
The packed mixture was stored in a heated environment at 85°C for 1 hour for thermal sterilization.
After the thermal sterilization, secondary cooling was performed by immersing the resultant mixture in cold water at a temperature of up to 10°C so that the center of the mixture was cooled. After the secondary cooling, the mixture was kept in a freezer.

When the frozen processed food material manufactured in the above steps was thawed, it was found that the Okara and the Konjac were integrally tied with each other.
After the thawing, the processed food material was tasted and found that it does not have a dry texture as the same as processed foods obtained by methods of the patent documents 1 and 2. In addition, it tasted mild, which was quite different from the textures of foods composed of only Okara or Konjac.

In a second embodiment, tokoroten (a marine alga) was blended with the Okara coagulant instead of Konjac for integration. Further, a sweetener was added thereto, thereby resulting in a processed food for sweet stuff.
The Okara coagulant was prepared by blending of a sweetener in the same manner as in the first embodiment. Then, tokoroten (a marine alga) was added to the prepared Okara coagulant, and the obtained mixture was kneaded. The resultant kneaded mixture was heated and coagulated.

In a third embodiment, a Konjac component was blended with an Okara component as in the first embodiment, and further a meat paste was blended therewith so that the resultant mixture was used as a processed food material for sausage or hamburger.
In the case of this processed food material, an Okara coagulant blended with a meat paste was kneaded with a Konjac paste in the same manner as in the first embodiment. Thereafter, the resultant mixture was packed in vacuum in a form of sausage or hamburger, and heated and coagulated.
Since the subsequent processes are the same as those of the first embodiment, they are omitted.
In the third embodiment, a healthy sausage composed of Okara, Konjac and meat paste was manufactured.

## Claims

1. A method of producing a processed food material comprising the steps of:
preparing Okara (bean curd refuse) by mixing with a coagulant;
kneading the prepared Okara with a jelly-type edible polysaccharide having a high thickening stability; and
coagulating by heating the kneaded mixture so that the Okara is bonded to the edible polysaccharide.

2. The method of producing a processed food material according to claim 1, wherein tokoroten (a marine alga), Konjac, or Kudzu starch jelly is used as the edible polysaccharide.

3. The method of producing a processed food material according to claim 2,
wherein:
Konjac is used as the edible polysaccharide;
calcium hydroxide or calcium oxide is used as the coagulant and the coagulant is stirred with warm water or ordinary temperature water to prepare an alkali solution;
adding the alkali solution to the Okara and stirring the mixture to prepare the Okara; and
storing a Konjac paste prepared by stirring refined Konjac flour and water for a predetermined time period ;and then,
kneading the Konjac paste with the prepared Okara for a predetermined time period.

4. The method of producing a processed food material according to any one of claims 1 to 3, wherein powdery Okara is used as the Okara, the powdery Okara is miniaturized by passing the powder through a mesh so as to have a size of approximately 0.05 to 1 mm, and the miniaturized powdery Okara is stirred for a predetermined time period before mixed and stirred with the alkali solution.

5. A processed food material, wherein a miniaturized Okara component having a size of 0.05 to 1 mm is bonded to a edible polysaccharide having a high thickening stability, and the Okara component is dispersed and mixed on the surface and inside of the edible polysaccharide.

6. The processed food material according to claim 5, wherein the edible polysaccharide is tokoroten (a marine alga), Konjac or Kudzu starch jelly.

7. The processed food material according to claim 6, wherein:
the edible polysaccharide is Konjac;
the processed food material contains 1 to 5 mass% of Konjac component, 4 to 10 mass% of Okara component and 70 to 95 mass% of water so that the total of the Konjac component, the Okara component and the water is 100 mass%; and
a coagulant is present in an amount of 1 to 15 mass% with respect to 100 mass% of the Konjac component.

8. The processed food material according to any one of claims 5 to 7, wherein the processed food material is prepared so as to have 10 to 50 calories per 100 g.

9. The processed food material according to claim 7 or 8, wherein calcium hydroxide or calcium oxide is used as the coagulant and calcined seashell or/and calcined eggshell are used when calcium hydroxide is used.

10. The processed food material according to any one of claims 5 to 9, wherein a seasoning, an animal food material of meat or fish, or/and a plant food material of a vegetable or fruit is added.

11. The processed food material according to any one of claims 5 to 10, wherein the processed food material is produced by the producing method of any one of claims 1 to 4.
